(19) Europäisches Patentamt
European Patent Office
Office européen des brevets

(11) EP 3 429 959 B1

(12) # FASCICULE DE BREVET EUROPEEN

(45) Date de publication et mention de la délivrance du brevet:
**03.05.2023 Bulletin 2023/18**

(21) Numéro de dépôt: **17715230.3**

(22) Date de dépôt: **14.03.2017**

(51) Classification Internationale des Brevets (IPC):
***C01B 3/16*** *(2006.01)* ***C01B 3/48*** *(2006.01)*

(52) Classification Coopérative des Brevets (CPC):
**C01B 3/16; C01B 3/48;** C01B 2203/0227; C01B 2203/025; C01B 2203/0283; Y02P 20/52

(86) Numéro de dépôt international:
**PCT/FR2017/050574**

(87) Numéro de publication internationale:
**WO 2017/158276 (21.09.2017 Gazette 2017/38)**

(54) **PROCÉDÉ DE PRODUCTION DE GAZ DE SYNTHÈSE ENRICHI EN HYDROGÈNE**

VERFAHREN ZUR HERSTELLUNG VON WASSERSTOFFANGEREICHERTEM SYNTHESEGAS

METHOD FOR THE PRODUCTION OF HYDROGEN-ENRICHED SYNGAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2016 FR 1652290**

(43) Date de publication de la demande:
**23.01.2019 Bulletin 2019/04**

(60) Demande divisionnaire:
**23163868.5**

(73) Titulaire: **Arkema France**
**92700 Colombes (FR)**

(72) Inventeurs:
- **HUMBLOT, Francis**
**64300 Lanneplaa (FR)**
- **SCHMITT, Paul Guillaume**
**64230 Lescar (FR)**

(56) Documents cités:
**US-A- 4 243 554 US-A- 4 389 335**

- **LIAN Y ET AL: "Water gas shift activity of Co-Mo/MgO-Al2O3 catalysts presulfided with ammonium sulfide", JOURNAL OF NATURAL GAS CHEMISTRY, ELSEVIER, US, CN, vol. 19, no. 1, 1 janvier 2010 (2010-01-01), pages 61-66, XP026912303, ISSN: 1003-9953, DOI: 10.1016/S1003-9953(09)60037-2 [extrait le 2010-01-01] -& FRANCK LABRUYÈRE ET AL: "Ex situ sulfidation by alkylpolysulfides: A route for the preparation of highly dispersed supported sulfides", CATALYSIS TODAY, vol. 43, 1 janvier 1998 (1998-01-01), pages 111-116, XP055308715,**
- **TEXIER S ET AL: "Activation of alumina-supported hydrotreating catalysts by organosulfides: comparison with H2S and effect of different solvents", JOURNAL OF CATALYSIS, ACADEMIC PRESS, DULUTH, MN, US, vol. 223, no. 2, 25 avril 2004 (2004-04-25), pages 404-418, XP004500283, ISSN: 0021-9517, DOI: 10.1016/J.JCAT.2004.02.011**
- **LANIECKI M ET AL: "Water-gas shift reaction over sulfided molybdenum catalysts supported on TiO2-ZrO2 mixed oxides", CATALYSIS TODAY, ELSEVIER, NL, vol. 116, no. 3, 15 août 2006 (2006-08-15) , pages 400-407, XP027975859, ISSN: 0920-5861 [extrait le 2006-08-15]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

**Description**

DOMAINE DE L'INVENTION

La présente invention concerne un procédé de production de gaz de synthèse enrichi en hydrogène par une réaction de déplacement du gaz à l'eau catalytique conduite sur un gaz de synthèse brut.

CONTEXTE DE L'INVENTION

Un gaz de synthèse, ou syngas en anglais, est un mélange de gaz combustible comprenant du monoxyde de carbone et de l'hydrogène, et facultativement d'autres gaz, tels que le dioxyde de carbone, l'azote et l'eau, des hydrocarbures (par exemple, le méthane), des gaz rares (par exemple, l'argon), des dérivés d'azote (par exemple, l'ammoniac, l'acide hydrocyanique), etc. Un gaz de synthèse peut être produit à partir de nombreuses sources, comprenant le gaz naturel, le charbon, une biomasse, ou pratiquement toute matière première hydrocarbure, par réaction avec de la vapeur d'eau ou de l'oxygène. Un gaz de synthèse est une ressource intermédiaire polyvalente pour la production d'hydrogène, d'ammoniac, de méthanol, et de combustibles hydrocarbures synthétiques.

Différents procédés sont couramment utilisés dans l'industrie pour la production de gaz de synthèse, principalement :

- le vaporeformage du méthane (SMR) ou le vaporeformage pour la conversion de méthane principalement. Le gaz de synthèse résultant ne contient pas de composés soufrés ;
- La gazéification ou oxydation partielle (POx) qui peut également être catalytique (CPOx) est principalement utilisée pour la conversion de matières premières lourdes telles que le naphte, le gaz de pétrole liquéfié, le mazout lourd, le coke, le charbon, une biomasse... Le gaz de synthèse résultant peut être particulièrement riche en composants contenant du soufre, principalement le sulfure d'hydrogène.

De la vapeur d'eau peut être ajoutée au gaz de synthèse afin de produire une quantité d'hydrogène plus élevée selon la réaction bien connue de déplacement du gaz à l'eau (« WGSR ») qui peut être conduite pour éliminer partiellement ou totalement le monoxyde de carbone par conversion de celui-ci en dioxyde de carbone :

$$H_2O_{(g)} + CO_{(g)} \leftrightarrows CO_{2(g)} + H_{2(g)}$$

où (g) indique une forme gazeuse.

La réaction de déplacement du gaz à l'eau est une réaction chimique exothermique, réversible couramment utilisée dans l'industrie.

Cette réaction peut être catalysée afin d'être conduite dans une plage de température raisonnable, typiquement moins de 500 °C. Le type de catalyseur généralement utilisé dépend de la teneur en soufre du gaz de synthèse à traiter. Par conséquent, les catalyseurs de déplacement du gaz à l'eau sont généralement classés dans deux catégories, comme décrit par David S. Newsome dans Catal. Rev.-Sci. Eng., 21(2), p. 275-318 (1980):

- les catalyseurs de déplacement à base de fer ou à base de cuivre, également appelés « catalyseurs de déplacement doux (sweet) », sont utilisés avec un gaz de synthèse exempt de soufre (après une SMR, par exemple) en raison de leur désactivation par le soufre ;
- les catalyseurs de déplacement à base de cobalt et de molybdène, également appelés « catalyseurs de déplacement résistants au soufre » ou « catalyseurs de déplacement durs (sour) », qui sont utilisés avec un gaz de synthèse contenant du soufre (obtenu après une gazéification de charbon, par exemple). Ces catalyseurs sont fréquemment dopés avec un métal alcalin tel que le sodium, le potassium ou le césium.

La différence principale entre les catalyseurs de déplacement doux et les catalyseurs de déplacement résistants au soufre est que ces derniers sont actifs sous forme sulfurée et, par conséquent, doivent être pré-sulfurés avant utilisation. Les catalyseurs de déplacement résistants au soufre sont donc généralement totalement sulfurés sous leur forme la plus active. Par conséquent, ces catalyseurs ne sont pas seulement tolérants au soufre, mais leur activité peut en fait être augmentée par le soufre présent dans la matière première à traiter.

Les catalyseurs de déplacement résistants au soufre ont été largement développés ces dernières années. En effet, la quantité de combustibles fossiles, principalement le gaz naturel et le pétrole, est en constante diminution et de nombreux chercheurs ont consacré leurs études au développement de procédés utilisant des sources de carbone moins nobles, telles que le charbon ou une biomasse, qui sont généralement particulièrement riches en soufre. Le gaz de

synthèse obtenu à partir de ces sources de carbone contient généralement du sulfure d'hydrogène ($H_2S$) et du sulfure de carbonyle (COS) qui peuvent activer et maintenir l'activité des catalyseurs de déplacement résistants au soufre pendant la réaction de déplacement du gaz à l'eau consécutivement conduite.

Cependant, certains gaz de synthèse ne contiennent pas une quantité suffisante de composés contenant du soufre en raison des faibles teneurs en soufre dans la matière première carbonée initiale. En effet, la teneur en soufre (endogène) des gaz de synthèse dépend principalement du type de charbon et de l'origine du charbon comme indiqué dans le tableau 1.

Tableau 1 : propriétés typiques pour des types de charbon caractéristiques

| **Type de charbon** | **Teneur en énergie, kJ/g (teneur en carbone, % en poids)** | **Soufre (% en poids)** |
|---|---|---|
| Bitumineux | 27 900 (moyenne consommée aux États-Unis)<br>67 % | 2-4 |
| Sous-bitumineux (bassin de la Powder River) | 20 000 (moyenne consommée aux États-Unis)<br>49 % | 0,5-0,5 |
| Lignite | 15 000 (moyenne consommée aux États-Unis)<br>40 % | 0,6-1,6 |
| Charbon chinois moyen | 19 000-25 000<br>48-61 % | 0,4-3,7 |
| Charbon indien moyen | 13 000-21 000<br>30-50 % | 0,2-0,7 |

Le sulfure d'hydrogène ($H_2S$) est la principale source de soufre dans un gaz de synthèse obtenu après gazéification. Pour un gaz de synthèse contenant une teneur en soufre insuffisante, l'ajout de sulfure d'hydrogène supplémentaire (sulfure d'hydrogène exogène) est généralement effectué pour activer efficacement le catalyseur de déplacement résistant au soufre. En effet, l'ajout de $H_2S$ à un mélange de CO et $H_2O$ augmente considérablement la formation de $H_2$ et $CO_2$, comme décrit par Stenberg et al. dans Angew. Chem. Int. Ed. Engl., 21 (1982) n° 8, p. 619-620.

Cependant, le sulfure d'hydrogène présente l'inconvénient d'être un composé gazeux hautement toxique et inflammable que les fabricants s'efforcent d'éviter.

Par conséquent, il serait souhaitable de développer un nouveau procédé qui ne met pas en oeuvre l'utilisation de sulfure d'hydrogène, tout en étant aussi efficace qu'un procédé qui met en oeuvre l'ajout de sulfure d'hydrogène pour activer les catalyseurs de déplacement résistants au soufre et maintenir leur activité.

Il est un objectif de la présente invention de développer un procédé plus sûr pour la réaction de déplacement du gaz à l'eau à partir d'un gaz de synthèse contenant du soufre.

Un autre objectif de la présente invention est la mise en oeuvre d'un procédé à l'échelle industrielle pour la réaction de déplacement du gaz à l'eau à partir d'un gaz de synthèse contenant du soufre.

## RÉSUMÉ DE L'INVENTION

Un premier objet de l'invention est un procédé de production de gaz de synthèse enrichi en hydrogène par une réaction de déplacement du gaz à l'eau catalytique conduite sur un gaz de synthèse brut, comprenant les étapes suivantes :

- introduction d'un flux gazeux 1 comprenant au moins un composé de formule (I)

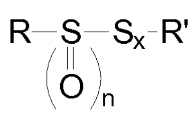

(I)

dans laquelle R est choisi parmi un radical alkyle linéaire ou ramifié contenant de 1 à 4 atomes de carbone, et un radical alcényle linéaire ou ramifié contenant de 2 à 4 atomes de carbone, n est égal à 0, 1 ou 2, x est un entier choisi parmi 0, 1, 2, 3 ou 4, R' est choisi parmi un radical alkyle linéaire ou ramifié contenant de 1 à 4

atomes de carbone, un radical alcényle linéaire ou ramifié contenant de 2 à 4 atomes de carbone et, uniquement lorsque n=x=0, un atome d'hydrogène,

dans un premier réacteur 2 comprenant un catalyseur $X_1$, ledit catalyseur $X_1$ comprenant au moins un métal choisi dans les groupes VI B et VII de la table périodique,

- collecte d'un flux gazeux contenant du soufre 3 à partir du premier réacteur,
- introduction du gaz de synthèse brut 4 dans un deuxième réacteur 6,
- introduction du flux gazeux contenant du soufre 3 dans le deuxième réacteur où la réaction de déplacement du gaz à l'eau catalytique se produit et comprenant un catalyseur de déplacement résistant au soufre $X_2$, le flux gazeux contenant du soufre 3 étant introduit dans le deuxième réacteur directement par l'intermédiaire du flux 3.1 et/ou après mélange par l'intermédiaire du flux 3.2 avec le gaz de synthèse brut 4,
- collecte d'un flux de sortie 7 à partir du deuxième réacteur, ledit flux de sortie 7 comprenant un gaz de synthèse enrichi en hydrogène.

Selon un mode de réalisation, le composé de formule (I) est choisi parmi le disulfure de diméthyle et le diméthylsulfoxyde, de préférence le disulfure de diméthyle.

Selon un mode de réalisation, la réaction de déplacement du gaz à l'eau catalytique est conduite avec une température de gaz d'entrée d'au moins 230 °C, de préférence de 240 à 320 °C, plus préférablement de 250 à 310 °C.

Selon un mode de réalisation, le premier réacteur 2 est utilisé à une température dans la plage de 100 à 600°C, de préférence de 150 à 400 °C, plus préférablement de 200 à 350 °C.

Selon un mode de réalisation, le premier réacteur 2 est utilisé à une pression dans la plage de 0 à 60 bar, de préférence de 10 à 40 bar.

De préférence, le composé de formule (I) est injecté en continu dans le premier réacteur 2 à un débit de 1 Nl/h à 10 $Nm^3/h$.

Selon un mode de réalisation, un flux d'hydrogène est introduit dans le premier réacteur 2, ledit flux d'hydrogène provenant d'une source exogène ou étant collecté à partir du flux de sortie 7 du deuxième réacteur 6.

De préférence, le catalyseur $X_1$ comprend du molybdène, du tungstène, du nickel et du cobalt, ledit catalyseur étant de préférence immobilisé sur un support de matériau poreux tel que l'alumine, la silice ou la silice-alumine.

De préférence, le catalyseur $X_2$ est un catalyseur à base de cobalt et de molybdène.

Selon un mode de réalisation préféré, le catalyseur $X_2$ comprend un métal alcalin, de préférence le sodium, le potassium ou le césium.

Selon un mode de réalisation, la réaction de déplacement du gaz à l'eau catalytique est conduite à une pression d'au moins 10 bar, de préférence dans la plage de 10 à 25 bar.

Selon un mode de réalisation, le gaz de synthèse brut 4 comprend de l'eau et du monoxyde de carbone dans un rapport molaire de l'eau au monoxyde de carbone d'au moins 1, de préférence au moins 1,2, plus préférablement au moins 1,4.

De préférence, le temps de séjour dans le deuxième réacteur 6 est dans la plage de 20 à 60 secondes.

Un autre objet de l'invention est l'utilisation d'au moins un composé de formule (I) :

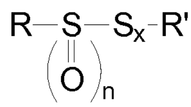

(I)

dans laquelle R est choisi parmi un radical alkyle linéaire ou ramifié contenant de 1 à 4 atomes de carbone, et un radical alcényle linéaire ou ramifié contenant de 2 à 4 atomes de carbone, n est égal à 1 ou 2, x est un entier choisi parmi 0, 1, 2, 3 ou 4, R' est choisi parmi un radical alkyle linéaire ou ramifié contenant de 1 à 4 atomes de carbone, un radical alcényle linéaire ou ramifié contenant de 2 à 4 atomes de carbone dans un procédé de production de gaz de synthèse enrichi en hydrogène par une réaction de déplacement du gaz à l'eau catalytique conduite sur un gaz de synthèse brut.

Il a été désormais découvert de manière inattendue que l'utilisation de composé(s) de formule (I) est particulièrement efficace pour la production d'hydrogène par une réaction de déplacement du gaz à l'eau catalytique sur un gaz de synthèse brut.

De plus, les composés de formule (I) sont généralement présentés sous forme liquide, ce qui facilite grandement leur manipulation et les mesures devant être prises pour la sécurité des opérateurs.

Un autre avantage est que le procédé de l'invention permet la conversion de CO en $CO_2$.

De plus, le procédé de l'invention est adapté en ce qui concerne les exigences relatives à la sécurité l'environnement.

BRÈVE DESCRIPTION DE LA FIGURE

La figure 1 représente un mode de réalisation d'une installation pour le procédé selon l'invention.

DESCRIPTION DÉTAILLÉE DE L'INVENTION

L'invention concerne un procédé de production de gaz de synthèse enrichi en hydrogène par une réaction de déplacement du gaz à l'eau catalytique conduite sur un gaz de synthèse brut, comprenant les étapes suivantes :

- introduction d'un flux gazeux 1 comprenant au moins un composé de formule (I) :

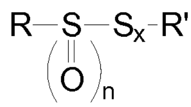

(I)

dans laquelle R est choisi parmi un radical alkyle linéaire ou ramifié contenant de 1 à 4 atomes de carbone, et un radical alcényle linéaire ou ramifié contenant de 2 à 4 atomes de carbone, n est égal à 0, 1 ou 2, x est un entier choisi parmi 0, 1, 2, 3 ou 4, R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène,
dans un premier réacteur 2 comprenant un catalyseur $X_1$, ledit catalyseur $X_1$ comprenant au moins un métal choisi dans les groupes VI B et VII de la table périodique,

- collecte d'un flux gazeux contenant du soufre 3 à partir du premier réacteur 2,
- introduction du gaz de synthèse brut 4 dans un deuxième réacteur 6,
- introduction du flux gazeux contenant du soufre 3 dans le deuxième réacteur 6 où la réaction de déplacement du gaz à l'eau catalytique se produit et comprenant un catalyseur de déplacement résistant au soufre $X_2$, le flux gazeux contenant du soufre 3 étant introduit dans le deuxième réacteur directement par l'intermédiaire du flux 3.1 et/ou après mélange par l'intermédiaire du flux 3.2 avec le gaz de synthèse brut 4,
- collecte d'un flux de sortie 7 à partir du deuxième réacteur 6, ledit flux de sortie 7 comprenant un gaz de synthèse enrichi en hydrogène.

Dans le contexte de la présente invention, un radical « alkyle » désigne une chaîne hydrocarbonée saturée comprenant des atomes de carbone et des atomes d'hydrogène, de préférence constituée uniquement d'atomes de carbone et d'atomes d'hydrogène.

Dans le contexte de la présente invention, un radical « alcényle » désigne une chaîne hydrocarbonée insaturée comprenant au moins une double liaison carbone-carbone et comprenant des atomes de carbone et des atomes d'hydrogène, de préférence constituée uniquement d'atomes de carbone et d'atomes d'hydrogène.

Dans un mode de réalisation de l'invention, le premier réacteur 2 est un réacteur catalytique, de préférence un réacteur catalytique à lit fixe. Le flux gazeux 1 peut être chauffé avant d'entrer dans le premier réacteur 2 à une température dans la plage de 100 à 600 °C, de préférence dans la plage de 100 à 400 °C.

Le premier réacteur 2 comprend un catalyseur $X_1$ comprenant au moins un métal choisi dans les groupes VI B et VII de la table périodique, de préférence le molybdène, le tungstène, le nickel et le cobalt. Une combinaison d'au moins deux de ces métaux de transition est de préférence utilisée, telle que cobalt et molybdène, ou nickel et molybdène, ou nickel et tungstène, plus préférablement cobalt et molybdène.

Le catalyseur $X_1$ peut être immobilisé sur un support de matériau poreux tel que l'alumine, la silice ou la silice-alumine.

À titre d'exemple de catalyseur $X_1$ selon l'invention adapté, il peut être mentionné un catalyseur contenant du cobalt et du molybdène sur un support d'alumine.

Dans un mode de réalisation préféré de l'invention, le premier réacteur 2 comprenant le catalyseur $X_1$ peut être rempli avec un matériau inerte pour permettre une distribution efficace du flux gazeux dans le premier réacteur 2. Des matériaux inertes adaptés peuvent être le carbure de silicium. Avantageusement, le catalyseur $X_1$ et le matériau inerte sont placés dans des couches successives dans le premier réacteur 2.

Le flux gazeux 1 introduit dans le premier réacteur 2 comprend au moins un composé de formule (I) :

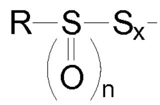

(I)

dans laquelle :

- R est choisi parmi un radical alkyle linéaire ou ramifié contenant de 1 à 4 atomes de carbone, et un radical alcényle linéaire ou ramifié contenant de 2 à 4 atomes de carbone,
- n est égal à 0, 1 ou 2,
- x est un entier choisi parmi 0, 1, 2, 3 ou 4,
- R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène.

Selon un mode de réalisation, le composé de formule (I) qui peut être utilisé dans le procédé de la présente invention est un sulfure organique, facultativement sous sa forme d'oxyde (lorsque n est différent de zéro), obtenu selon un procédé quelconque connu en tant que tel, ou sinon, disponible dans le commerce, contenant facultativement une quantité réduite ou nulle d'impuretés qui peuvent être responsables d'odeurs indésirables, ou contenant facultativement un ou plusieurs agents de masquage d'odeur (voir, par exemple, WO2011012815A1).
Parmi les radicaux R et R' préférés, il peut être mentionné les radicaux méthyle, propyle, allyle et 1-propényle.
Selon un mode de réalisation de l'invention, dans la formule (I) ci-dessus, x représente 1, 2, 3 ou 4, de préférence x représente 1 ou 2, plus préférablement x représente 1.
Selon un mode de réalisation préféré, le composé de formule (I) pour utilisation dans le procédé de la présente invention est un composé de formule (Ia) :

$R\text{-}S\text{-}S_x\text{-}R'$ (Ia)

qui correspond à la formule (I) dans laquelle n est égal à 0, et R, R' et x sont tels que définis ci-dessus.
De préférence, le composé de formule (Ia) est le disulfure de diméthyle (« DMDS »).
Selon un mode de réalisation préféré de l'invention, le composé de formule (I) pour utilisation dans le procédé de la présente invention est un composé de formule (Ib) :

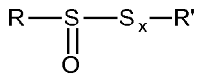

(Ib)

qui correspond à la formule (I) dans laquelle n est égal à 1, et R, R' et x sont tels que définis ci-dessus.
De préférence, le composé de formule (Ib) est le diméthylsulfoxyde (« DMSO »).
Il doit être entendu que des mélanges de deux composés de formule (I) ou plus peuvent être utilisés dans le procédé de la présente invention. En particulier, des mélanges de di- et/ou polysulfures peuvent être utilisés, par exemple des mélanges de disulfures, tels que des huiles de disulfure (« DSO »).
Dans un mode de réalisation de l'invention, le flux gazeux 1 est injecté en continu dans le premier réacteur 2. La concentration de composé(s) de formule (I), de préférence le disulfure de diméthyle, dans le flux gazeux 1 peut être dans la plage de 100 à 500 000 ppmv, de préférence de 100 à 200 000 ppmv, plus préférablement de 100 à 100 000 ppmv. Le débit de composé(s) de formule (I), de préférence le disulfure de diméthyle, peut être dans la plage de 1 Nl/h à 10 $Nm^3/h$.
Dans un mode de réalisation de l'invention, le flux gazeux 1 comprend en outre de l'hydrogène. L'hydrogène peut provenir d'une source exogène ou peut être collecté à partir du flux de sortie 7 du deuxième réacteur 6. Une « source exogène » désigne une source extérieure au procédé. La concentration d'hydrogène dans le flux gazeux 1 peut être dans la plage de 100 à $10^6$ ppmv, de préférence de 10 000 à 999 900 ppmv, plus préférablement de 200 000 à 999 900 ppmv. Le débit d'hydrogène dans le flux gazeux 1 peut être dans la plage de 0,1 $Nm^3/h$ à 10 000 $Nm^3/h$. Selon un mode de réalisation, l'hydrogène est récupéré, par exemple par purification, à partir du flux de sortie 7 avant d'être introduit dans le flux gazeux 1.
Le premier réacteur 2 peut être utilisé à une température dans la plage de 100 à 600 °C, de préférence de 150 à 400 °C, plus préférablement de 200 à 350 °C. Le premier réacteur 2 peut être utilisé à une pression dans la plage de 0 à 60 bar (6 MPa), de préférence de 10 à 40 bar (4 MPa).
Un flux gazeux contenant du soufre 3 est collecté à la sortie du premier réacteur 2 et introduit dans le deuxième

réacteur 6 où la réaction de déplacement du gaz à l'eau se produit. Le flux de gaz contenant du soufre 3 est introduit dans le deuxième réacteur 6 directement et/ou dans un mélange avec le gaz de synthèse brut 4. Une vanne 5 peut être présente dans la ligne contenant le flux gazeux contenant du soufre 3 afin de diriger le flux dans les lignes 3.1 ou 3.2 (voir, par exemple, figure 1). En référence à la figure 1, si la vanne 5 est programmée pour diriger le flux dans la ligne 3.1, le flux gazeux contenant du soufre 3 est introduit directement dans le deuxième réacteur 6 (indépendamment de l'introduction du gaz de synthèse brut 4). Si la vanne 5 est programmée pour diriger le flux dans la ligne 3.2, le flux gazeux contenant du soufre 3 est mélangé avec le gaz de synthèse brut 4 avant d'entrer dans le deuxième réacteur 6 ; dans ce mode de réalisation, un mélange de flux gazeux contenant du soufre 3 et de gaz de synthèse brut 4 est introduit dans le deuxième réacteur 6. Il est également possible de décrire un procédé dans lequel la vanne 5 dirige le flux 3 simultanément dans les lignes 3.1 et 3.2.

Le gaz de synthèse brut 4 est typiquement obtenu après une étape de gazéification d'une matière première telle que le coke, le charbon, une biomasse, le naphte, le gaz de pétrole liquéfié, le mazout lourd. La production de gaz de synthèse est connue dans l'état de l'art. Le gaz de synthèse brut 4 peut également être obtenu à partir d'un vaporeformeur de méthane.

Selon la présente invention, le gaz de synthèse brut 4 comprend du monoxyde de carbone, et facultativement d'autres gaz, tels que l'hydrogène, le dioxyde de carbone, l'azote et l'eau, des hydrocarbures (par exemple, le méthane), des gaz rares (par exemple, l'argon), des dérivés d'azote (par exemple, l'ammoniac, l'acide hydrocyanique), etc.

Selon un mode de réalisation de l'invention, le gaz de synthèse brut 4 comprend du monoxyde de carbone et de l'hydrogène, et facultativement d'autres gaz, tels que le dioxyde de carbone, l'azote et l'eau, des hydrocarbures (par exemple, le méthane), des gaz rares (par exemple, l'argon), des dérivés d'azote (par exemple, l'ammoniac, l'acide hydrocyanique), etc.

Selon un autre mode de réalisation de l'invention, le gaz de synthèse brut comprend du monoxyde de carbone, du dioxyde de carbone, de l'hydrogène, de l'azote et de l'eau.

Le gaz de synthèse brut 4 peut comprendre en outre des composants contenant du soufre. Dans ce cas, le gaz de synthèse brut 4 peut comprendre du monoxyde de carbone, du dioxyde de carbone, de l'hydrogène, de l'azote et de l'eau en tant que composants principaux et des composants contenant du soufre à des concentrations plus faibles. Les composants contenant du soufre peuvent être le sulfure d'hydrogène, le sulfure de carbonyle. La teneur en soufre (endogène) typique dans le gaz de synthèse brut 4 est dans la plage d'environ 20 à environ 50 000 ppmv. La teneur en soufre (endogène) typique dans le gaz de synthèse brut 4 peut dépendre de la matière première initialement utilisée pour la production du gaz de synthèse brut 4.

La réaction de déplacement du gaz à l'eau est conduite dans le deuxième réacteur 6 comprenant un catalyseur $X_2$.

La réaction de déplacement du gaz à l'eau consiste en la conversion de monoxyde de carbone et d'eau contenus dans le gaz de synthèse brut 4 en dioxyde de carbone et en hydrogène selon l'équation (1) :

$$H_2O_{(g)} + CO_{(g)} \leftrightarrows CO_{2(g)} + H_{2(g)} \qquad (1)$$

où (g) indique une forme gazeuse.

Cette réaction de déplacement du gaz à l'eau permet d'obtenir un gaz de synthèse enrichi en hydrogène.

Un « gaz de synthèse enrichi en hydrogène » selon la présente invention signifie que le gaz de synthèse à la sortie du procédé de l'invention comprend plus d'hydrogène que le gaz de synthèse à l'entrée du procédé de l'invention. En d'autres termes, la proportion d'hydrogène dans le gaz à la sortie du procédé (courant 7) est supérieure à la proportion d'hydrogène dans le gaz à la sortie du procédé (courant 4).

Selon un mode de réalisation de l'invention, de l'eau peut être ajoutée au gaz de synthèse brut 4. L'introduction d'eau (exogène) additionnelle permet de déplacer l'équilibre vers la formation de dioxyde de carbone et d'hydrogène. De l'eau (exogène) additionnelle peut être introduite directement dans le deuxième réacteur 6 ou dans un mélange avec le gaz de synthèse brut 4.

L'efficacité de la réaction de déplacement du gaz à l'eau et donc, de l'enrichissement en hydrogène du gaz de synthèse peut être mesurée directement par analyse de pureté d'hydrogène, par exemple avec un système de chromatographie gazeuse. Elle peut également être mesurée indirectement par détermination de la conversion de CO en $CO_2$, qui indique que la réaction de déplacement du gaz à l'eau s'est produite. La conversion de CO en $CO_2$ est connue par mesure de la conversion de CO et du rendement en $CO_2$.

Dans un mode de réalisation de l'invention, le rapport molaire de l'eau au monoxyde de carbone dans le gaz entrant dans la réaction de déplacement du gaz à l'eau est d'au moins 1, de préférence au moins 1,2, plus préférablement au moins 1,4, avantageusement au moins 1,5. Le rapport molaire de l'eau au monoxyde de carbone peut être dans la plage de 1 à 3, de préférence de 1,2 à 2,5, plus préférablement de 1,5 à 2.

Dans un mode de réalisation de l'invention, le premier réacteur 6 est un réacteur catalytique, de préférence

un réacteur catalytique à lit fixe.

Le catalyseur $X_2$ adapté pour utilisation dans la réaction de déplacement du gaz à l'eau est un catalyseur de déplacement résistant au soufre. Un « catalyseur de déplacement résistant au soufre » désigne un composé capable de catalyser la réaction de déplacement du gaz à l'eau en présence de composants contenant du soufre.

Des catalyseurs adaptés pour utilisation dans la réaction de déplacement du gaz à l'eau peut comprendre au moins un métal de transition autre que le fer et le cuivre, de préférence choisi dans le groupe constitué du molybdène, du cobalt et du nickel. Une combinaison d'au moins deux de ces métaux de transition est de préférence utilisée, telle que cobalt et molybdène, ou nickel et molybdène, plus préférablement cobalt et molybdène.

Les catalyseurs selon l'invention peuvent être immobilisés ou non sur un support, de préférence immobilisés sur un support. Des supports de catalyseur adaptés peuvent être l'alumine.

Dans un mode de réalisation préféré, le catalyseur $X_2$ comprend en outre un métal alcalin choisi dans le groupe constitué du sodium, du potassium et du césium, de préférence le potassium et le césium, ou des sels de ceux-ci. Un exemple d'un catalyseur particulièrement actif est la combinaison de carbonate de césium, d'acétate de césium, de carbonate de potassium ou d'acétate de potassium, conjointement avec du cobalt et du molybdène.

À titre d'exemple de catalyseurs $X_2$ selon l'invention adaptés, il peut être mentionné des catalyseurs de déplacement résistants au soufre tels que ceux décrits par Park et al. dans « A Study on the Sulfur-Resistant Catalysts for Water Gas Shift Reaction - IV. Modification of CoMo/γ-Al2O3 Catalyst with Iron Group Metals », Bull. Korean Chem. Soc. (2000), vol. 21, n° 12, 1239-1244.

Dans un mode de réalisation de l'invention, le gaz entrant dans la réaction de déplacement du gaz à l'eau est préchauffé à une température d'au moins 230 °C. Dans un mode de réalisation préféré, cette température est dans la plage de 240 à 320 °C, de préférence de 250 à 310 °C.

Dans un mode de réalisation de l'invention, la température du gaz d'entrée dans le deuxième réacteur 6 est au moins 230 °C et de préférence au plus 400 °C. De préférence, cette température est dans la plage de 240 °C à 320 °C, de préférence de 250 °C à 310 °C.

Dans un mode de réalisation de l'invention, la pression pour la réaction de déplacement du gaz à l'eau est d'au moins 10 bar (1 MPa), de préférence dans la plage de 10 à 30 bar (1 MPa à 3 MPa), plus préférablement de 15 à 25 bar (1,5 MPa à 2,5 MPa).

Dans un mode de réalisation de l'invention, le temps de séjour dans le deuxième réacteur 6 est dans la plage de 20 à 60 secondes, de préférence de 30 à 50 secondes, de manière à permettre la détermination de la quantité de catalyseur $X_2$ dans le réacteur 6. Le temps de séjour est défini par la formule suivante :

$$temps\ de\ séjour = \frac{V_{cat}}{D_{gaz}} \times \frac{P_{réac}}{P_{atm}}$$

dans laquelle $V_{cat}$ représente le volume de catalyseur $X_2$ dans le réacteur 6 exprimé en $m^3$, $D_{gaz}$ représente le débit de gaz d'entrée du flux 3 et du flux 4 exprimé en $Nm^3/s$, $P_{réac}$ et $P_{atm}$ représentent respectivement la pression dans le réacteur et la pression atmosphérique exprimées en Pa.

Dans un mode de réalisation de l'invention, le taux de conversion de CO de la réaction de déplacement du gaz à l'eau est d'au moins 50 %, de préférence au moins 60 %, plus préférablement au moins 65 %. Le taux de conversion de CO est calculé comme suit :

$$Conversion\ de\ CO\ (\%) = \frac{(Q.CO_{entrée} - Q.CO_{sortie})}{Q.CO_{entrée}} \times 100$$

où $Q.CO_{entrée}$ représente le débit molaire de CO à l'entrée du réacteur 6 exprimé en mol/h et $Q.CO_{sortie}$ représente le débit molaire de CO à la sortie du réacteur 6 exprimé en mol/h.

Dans un mode de réalisation de l'invention, le rendement en $CO_2$ de la réaction de déplacement du gaz à l'eau est d'au moins 50 %, de préférence au moins 60 %, plus préférablement au moins 65 %.

Le rendement en $CO_2$ est calculé comme suit :

$$rendement\ en\ CO_2\ (\%) = \frac{(Q.CO_{2,sortie})}{(Q.CO_{entrée})} \times 100$$

où $Q.CO_{entrée}$ représente le débit molaire de CO à l'entrée du réacteur 6 exprimé en mol/h et $Q.CO_{2,\ sortie}$ représente le débit molaire de $CO_2$ à la sortie du réacteur 6 exprimé en mol/h.

Dans un mode de réalisation préféré de l'invention, le deuxième réacteur 6 comprenant le catalyseur $X_2$ peut être rempli avec un matériau inerte pour permettre une distribution efficace du gaz dans le deuxième réacteur avant le démarrage du réacteur pour l'étape de réaction de déplacement du gaz à l'eau. Des matériaux inertes adaptés peuvent être le carbure de silicium ou l'alumine. Avantageusement, le catalyseur $X_2$ et le matériau inerte sont placés dans des couches successives dans le réacteur.

Dans un mode de réalisation de l'invention, le temps de séjour dans le premier réacteur 2 est dans la plage de 50 à 1000 secondes, de préférence de 100 à 500 secondes, de manière à permettre la détermination de la quantité de catalyseur $X_1$ dans le réacteur 2.

Le temps de séjour est défini par la formule suivante :

$$temps\ de\ séjour = \frac{V_{cat}}{D_{gaz}} \times \frac{P_{réac}}{P_{atm}}$$

dans laquelle $V_{cat}$ représente le volume de catalyseur $X_1$ dans le premier réacteur 2 exprimé en $m^3$, $D_{gaz}$ représente le débit de gaz d'entrée du flux 1 exprimé en $Nm^3/s$, $P_{réac}$ et $P_{atm}$ représentent respectivement la pression dans le réacteur 2 et la pression atmosphérique exprimées en Pa.

Dans un mode de réalisation préféré de l'invention, une phase de démarrage du premier réacteur 2 est conduite avant la mise en oeuvre du procédé de l'invention. Premièrement, un flux gazeux comprenant au moins un composé de formule (I) et de l'hydrogène est injecté dans le premier réacteur 2. Le débit du ou des composé(s) de formule (I) dans le flux gazeux 1 peut être dans la plage de 1 Nl/h à 10 $Nm^3/h$. Le débit d'hydrogène peut être dans la plage de 0,1 à 10 000 $Nm^3/h$. Pendant cette phase de démarrage, la température est augmentée de la température ambiante à 400 °C, de préférence de 20 °C à 350 °C. La durée de la phase de démarrage peut être dans la plage de 1 à 64 heures, de préférence de 30 à 40 heures.

Pendant toute cette phase de démarrage, le flux gazeux contenant du soufre 3 à la sortie du premier réacteur 2 peut être dirigé vers une torche et/ou vers le deuxième réacteur 6 au moyen de tuyaux et de tubulures qui peuvent envoyer le flux gazeux contenant du soufre 3 vers la torche et/ou vers le deuxième réacteur 6.

Dans un mode de réalisation préféré de l'invention, une étape de préparation du catalyseur $X_2$ dans le deuxième réacteur 6 est conduite avant la mise en oeuvre du procédé de l'invention. L'étape de préparation du catalyseur $X_2$ peut comprendre une étape de séchage et/ou une étape de pré-activation, de préférence une étape de séchage et une étape de pré-activation.

Pendant l'étape de séchage, le catalyseur $X_2$ peut être séché sous un flux de gaz inerte, de préférence un flux de gaz d'azote. Le débit de gaz inerte peut être dans la plage de 0,1 à 10 000 $Nm^3/h$. Pendant l'étape de séchage, la température peut augmenter de 20 °C à 200 °C. Le temps de séchage peut être dans la plage de 1 à 10 heures, de préférence 6 heures. L'étape de séchage est de préférence conduite de la pression ambiante à la pression opératoire préférée entre 15 à 25 bar.

Pendant l'étape de pré-activation, le catalyseur $X_2$ peut être sulfuré. Le réacteur 6 peut être traité sous un courant d'hydrogène à un débit de 0,1 à 10 000 $Nm^3/h$ et à une pression d'au moins, 10 bar, la pression opératoire préférée comprise entre 15 et 25 bar. Ensuite, du sulfure d'hydrogène ou le flux gazeux contenant du soufre 3 à la sortie du premier réacteur 2 peut être injecté en flux ascendant à un débit de 1 Nl/h à 10 $Nm^3/h$ dans le courant d'hydrogène. La température du réacteur 6 peut ensuite être augmentée de 150 °C à 350 °C par des moyens quelconques connus de l'homme du métier. La durée de l'étape de pré-activation peut être dans la plage de 1 à 64 heures. Le courant d'hydrogène est de préférence maintenu pendant toute la durée de l'étape de pré-activation.

Un autre objet de l'invention concerne l'utilisation d'au moins un composé de formule (I) selon la revendication 14, dans un procédé de production de gaz de synthèse enrichi en hydrogène par une réaction de déplacement du gaz à l'eau catalytique conduite sur un gaz de synthèse brut.

## EXEMPLES

### Exemple 1 (comparatif)

Une réaction de déplacement du gaz à l'eau est conduite dans un réacteur catalytique 6' d'une installation pilote selon la procédure suivante.

1) Préparation du réacteur catalytique 6'

Un réacteur catalytique 6' de 150 $cm^3$ est rempli à pression ambiante et à température ambiante avec trois couches de matières solides séparées par des grilles métalliques, comme suit :

- une première couche de 60 $cm^3$ de carbure de silicium de type Carborundum ayant une taille de particule de 1,680 mm : ce matériau inerte permet une distribution de gaz satisfaisante,
- une deuxième couche de 40 $cm^3$ d'un catalyseur de déplacement résistant au soufre à base de CoMo,
- une troisième couche de 50 $cm^3$ de carbure de silicium de type Carborundum ayant une taille de particule de 1,680 mm.

Le réacteur catalytique 6' est ensuite placé dans un four qui peut supporter une large plage de température de 100 à 350 °C. Le réacteur catalytique 6' est raccordé à la tubulure d'entrée à une alimentation de gaz et à la tubulure de sortie à un analyseur.

Pour l'exemple, le catalyseur de déplacement résistant au soufre à base de CoMo est dans un premier temps séché par un débit d'azote de 20 Nl/h à pression ambiante. La température de séchage est définie à 150 °C avec une montée de température de +25 °C/h. Le temps de séchage est défini à 1 heure.

Une deuxième étape consiste à sulfurer le catalyseur de déplacement résistant au soufre à base de CoMo pour le rendre pré-actif. Pendant cette étape, le réacteur est traité sous un débit d'hydrogène de 20 Nl/h à une pression de 35 bar. Ensuite, du sulfure d'hydrogène est injecté en flux ascendant à un débit de 0,5 Nl/h dans l'alimentation d'hydrogène. Le catalyseur est ensuite soumis à une montée de température de +20 °C/h. Le premier plateau est défini à 150 °C pendant 2 heures, puis la température est augmentée jusqu'à 230 °C avec une montée de température de +25 °C/h. Un deuxième plateau de 4 heures est maintenu à 230 °C et ensuite, la température est à nouveau augmentée à 350 °C avec une montée de température de +25 °C/h. Un plateau final de 16 heures est effectué à 350 °C. La température est ensuite réduite à 230 °C toujours sous un courant d'hydrogène avec un débit de 20 Nl/h : le catalyseur est ainsi pré-activé.

2) Étape de réaction de déplacement du gaz à l'eau

L'étude de la conversion de monoxyde de carbone en dioxyde de carbone dans le catalyseur de déplacement résistant au soufre à base de CoMo pré-activé est ensuite conduite à 20 bar (2 MPa). Le réacteur catalytique 6' est traité en flux ascendant avec un mélange de gaz de synthèse comprenant de l'hydrogène à un débit de 8,5 Nl/h, du monoxyde de carbone à 17 Nl/h, de l'eau à 0,33 $cm^3$/min et de l'azote à 26 Nl/h à une pression de 20 bar (2 MPa). Le rapport molaire $H_2O/CO$ est de 1,44 et le temps de séjour est de 38 secondes. Du sulfure d'hydrogène est injecté en flux ascendant dans le mélange de gaz à un débit de 0,5 Nl/h. La température d'entrée du gaz entrant dans le réacteur catalytique 6' est maintenue à 310 °C.

Les concentrations de CO et $CO_2$ du flux de gaz sont mesurées par un analyseur de spectrométrie infrarouge raccordé à la sortie du réacteur catalytique A afin de déterminer la conversion de CO et le rendement en $CO_2$.

Un taux de conversion de CO de 92 % et un rendement en $CO_2$ de 95 % sont obtenus, un tel taux reflétant les bonnes performances de la réaction de déplacement du gaz à l'eau.

<u>Exemple 2 (selon l'invention)</u>

Une réaction de déplacement du gaz à l'eau est conduite dans un réacteur catalytique 6 raccordé en amont à un réacteur catalytique 2 selon la procédure suivante.

1) Préparation des réacteurs catalytiques

• Réacteur catalytique 6

En référence à la figure 1, un réacteur catalytique 6 de 150 $cm^3$ est rempli à pression ambiante et à température ambiante avec trois couches de matières solides séparées par des grilles métalliques, comme suit :

- une première couche de 60 $cm^3$ de carbure de silicium de type Carborundum ayant une taille de particule de 1,680 mm : ce matériau inerte permet une distribution de gaz satisfaisante,
- une deuxième couche de 40 $cm^3$ d'un catalyseur de déplacement résistant au soufre à base de CoMo,
- une troisième couche de 50 $cm^3$ de carbure de silicium de type Carborundum ayant une taille de particule de 1,680 mm.

Le réacteur catalytique 6 est ensuite placé dans un four qui peut supporter une large plage de température de 100 à 350 °C. Le réacteur catalytique 6 est raccordé à la tubulure d'entrée à une alimentation de gaz et à la tubulure de sortie à un analyseur.

Pour l'exemple, le catalyseur de déplacement résistant au soufre à base de CoMo est dans un premier temps

séché par un débit d'azote de 20 Nl/h à pression ambiante. La température de séchage est définie à 150 °C avec une montée de température de +25 °C/h. Le temps de séchage est défini à 1 heure.

Une deuxième étape consiste à sulfurer le catalyseur de déplacement résistant au soufre à base de CoMo pour le pré-activer. Pendant cette étape, le réacteur est traité sous un débit d'hydrogène de 20 Nl/h à une pression de 35 bar. Ensuite, du sulfure d'hydrogène est injecté en flux ascendant à un débit de 0,5 Nl/h dans l'alimentation d'hydrogène. Le catalyseur est ensuite soumis à une montée de température de 20 °C/h. Le premier plateau est défini à 150 °C pendant 2 heures, puis la température est augmentée jusqu'à 230 °C avec une montée de température de +25 °C/h. Un deuxième plateau de 4 heures est maintenu à 230 °C et ensuite, la température est à nouveau augmentée à 350 °C avec une montée de température de +25 °C/h. Un plateau final de 16 heures est effectué à 350 °C. La température est ensuite réduite à 230 °C toujours sous un courant d'hydrogène avec un débit de 20 Nl/h : le catalyseur est ainsi pré-activé.

• Réacteur catalytique 2

Un réacteur catalytique 2 de volume égal à 150 $cm^3$ est rempli à pression ambiante et à température ambiante avec trois couches de matières solides séparées par des grilles métalliques, comme suit :

- une première couche de 60 $cm^3$ de carbure de silicium de type Carborundum ayant une taille de particule de 1,680 mm : ce matériau inerte permet une distribution de gaz satisfaisante,
- une deuxième couche de 40 $cm^3$ d'un catalyseur à base de CoMo sur support de $Al_2O_3$ contenant 15 % en poids de Mo et 3 % en poids de Co,
- une troisième couche de 50 $cm^3$ de carbure de silicium de type Carborundum ayant une taille de particule de 1,680 mm.

La phase de démarrage du réacteur catalytique 2 consiste à placer ce réacteur rempli comme précédemment décrit dans un four et ensuite, traiter celui-ci sous un débit d'hydrogène de 20 Nl/h à une pression de 25 bar (2,5 MPa). Du disulfure de diméthyle (DMDS) est injecté dans le courant ascendant à l'état liquide à 1 $cm^3$/h dans le courant d'hydrogène 1. Le catalyseur à base de CoMo sur support de $Al_2O_3$ est soumis à une montée de température de +20 °C/h. Le premier plateau est défini à 150 °C pendant 2 heures, puis la température est augmentée jusqu'à 230 °C avec une montée de température de +25 °C/h. Un deuxième plateau de 4 heures est maintenu à 230 °C et ensuite, la température est à nouveau augmentée à 350 °C avec une montée de température de +25 °C/h. Un plateau final de 16 heures est conduit à 350 °C.

La température est ensuite abaissée à 310 °C en maintenant encore un débit de 1 $cm^3$/h de DMDS et la pression à 25 bar (2,5 MPa). Le débit d'hydrogène est diminué à 8,5 Nl/h. La phase de démarrage du réacteur 2 est alors terminée.

Pendant toute cette phase de démarrage, le mélange gazeux contenant du soufre 3 provenant du réacteur catalytique 2 est dirigé vers une torche et/ou vers le deuxième réacteur 6 au moyen de tuyaux et de tubulures qui peuvent envoyer le mélange gazeux vers la torche et/ou vers le réacteur 6.

2) Étape de réaction de déplacement du gaz à l'eau

L'étude de la conversion de monoxyde de carbone en dioxyde de carbone dans le catalyseur de déplacement résistant au soufre pré-activé est ensuite conduite à 20 bar (2 MPa). Le réacteur catalytique 6 est traité en flux ascendant avec un mélange gazeux 4 comprenant du monoxyde de carbone à 17 Nl/h, de l'eau à 0,33 $cm^3$/min et de l'azote à 26 Nl/h à une pression de 20 bar. Sauf pendant la phase de démarrage du réacteur catalytique 2, le mélange gazeux contenant du soufre 3 sortant du réacteur 2 est ensuite injecté dans le mélange gazeux 4, le mélange gazeux résultant 5 étant introduit dans le réacteur catalytique 6. La température d'entrée du gaz entrant dans le réacteur catalytique 6' est maintenue à 310 °C. Le rapport molaire $H_2O/CO$ est de 1,4 et le temps de séjour est de 38 secondes.

Les concentrations de CO et $CO_2$ du flux gazeux sont mesurées par un analyseur de spectrométrie infrarouge raccordé à la ligne de sortie 7 du réacteur catalytique 6 afin de déterminer la conversion de CO et le rendement en $CO_2$.

Un taux de conversion de CO de 92 % et un rendement en $CO_2$ de 95 % sont obtenus, reflétant les bonnes performances de la réaction de déplacement du gaz à l'eau, équivalentes à celles obtenus avec $H_2S$ en tant qu'agent d'activation dans l'exemple 1. Par conséquent, DMDS est aussi efficace que $H_2S$ dans un procédé pour la réaction de déplacement du gaz à l'eau catalytique.

Le procédé utilisant au moins un composé selon la formule (I) tel que défini dans la présente invention à la place du sulfure d'hydrogène gazeux est, par conséquent, aussi efficace, plus sûr et plus facile à mettre en oeuvre.

## Revendications

1. Procédé de production de gaz de synthèse enrichi en hydrogène par une réaction de déplacement du gaz à l'eau catalytique conduite sur un gaz de synthèse brut, comprenant les étapes suivantes :

   - introduction d'un flux gazeux (1) comprenant au moins un composé de formule (I)

   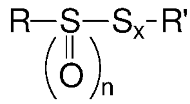

   (I)

   dans laquelle R est choisi parmi un radical alkyle linéaire ou ramifié contenant de 1 à 4 atomes de carbone, et un radical alcényle linéaire ou ramifié contenant de 2 à 4 atomes de carbone, n est égal à 0, 1 ou 2, x est un entier choisi parmi 0, 1, 2, 3 ou 4, R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène,
   dans un premier réacteur (2) comprenant un catalyseur $X_1$, ledit catalyseur $X_1$ comprenant au moins un métal choisi dans les groupes VIB et VII de la table périodique,

   - collecte d'un flux gazeux contenant du soufre (3) à partir du premier réacteur,
   - introduction du gaz de synthèse brut (4) dans un deuxième réacteur (6),
   - introduction du flux gazeux contenant du soufre (3) dans le deuxième réacteur où la réaction de déplacement du gaz à l'eau catalytique se produit et comprenant un catalyseur de déplacement résistant au soufre $X_2$, le flux gazeux contenant du soufre (3) étant introduit dans le deuxième réacteur directement par l'intermédiaire du flux (3.1) et/ou après mélange par l'intermédiaire du flux (3.2) avec le gaz de synthèse brut (4),
   - collecte d'un flux de sortie (7) à partir du deuxième réacteur, ledit flux de sortie (7) comprenant un gaz de synthèse enrichi en hydrogène.

2. Procédé selon la revendication 1, dans lequel le composé de formule (I) est choisi parmi le disulfure de diméthyle et le diméthylsulfoxyde, de préférence le disulfure de diméthyle.

3. Procédé selon la revendication 1 ou la revendication 2, dans lequel la réaction de déplacement du gaz à l'eau catalytique est conduite avec une température de gaz d'entrée d'au moins 230 °C, de préférence de 240 à 320 °C, plus préférablement de 250 à 310 °C.

4. Procédé selon l'une quelconque des revendications 1 à 3, dans lequel le premier réacteur (2) est utilisé à une température dans la plage de 100 à 600 °C, de préférence de 150 à 400 °C, plus préférablement de 200 à 350 °C.

5. Procédé selon l'une quelconque des revendications 1 à 4, dans lequel le premier réacteur (2) est utilisé à une pression dans la plage de 0 à 60 bar, de préférence de 10 à 40 bar.

6. Procédé selon l'une quelconque des revendications 1 à 5, dans lequel le composé de formule (I) est injecté en continu dans le premier réacteur (2) à un débit de 1 Nl/h à 10 $Nm^3/h$.

7. Procédé selon l'une quelconque des revendications 1 à 6, dans lequel un flux d'hydrogène est introduit dans le premier réacteur (2), ledit flux d'hydrogène provenant d'une source exogène ou étant collecté à partir du flux de sortie (7) du deuxième réacteur (6).

8. Procédé selon l'une quelconque des revendications 1 à 7, dans lequel le catalyseur $X_1$ comprend au moins un métal choisi parmi le molybdène, le tungstène, le nickel et le cobalt, ledit catalyseur étant de préférence immobilisé sur un support de matériau poreux tel que l'alumine, la silice ou la silice-alumine.

9. Procédé selon l'une quelconque des revendications 1 à 8, dans lequel le catalyseur $X_2$ est un catalyseur à base de cobalt et de molybdène.

10. Procédé selon l'une quelconque des revendications 1 à 9, dans lequel le catalyseur $X_2$ comprend un métal alcalin, de préférence le sodium, le potassium ou le césium.

**11.** Procédé selon l'une quelconque des revendications 1 à 10, dans lequel la réaction de déplacement du gaz à l'eau catalytique est conduite à une pression d'au moins 10 bar, de préférence dans la plage de 10 à 25 bar.

**12.** Procédé selon l'une quelconque des revendications 1 à 11, dans lequel le gaz de synthèse brut (4) comprend de l'eau et du monoxyde de carbone dans un rapport molaire de l'eau au monoxyde de carbone d'au moins 1, de préférence au moins 1,2, plus préférablement au moins 1,4.

**13.** Procédé selon l'une quelconque des revendications 1 à 12, dans lequel le temps de séjour dans le deuxième réacteur (6) est dans la plage de 20 à 60 secondes.

**14.** Utilisation d'au moins un composé de formule (I) :

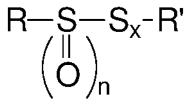

(I)

dans laquelle R est choisi parmi un radical alkyle linéaire ou ramifié contenant de 1 à 4 atomes de carbone, et un radical alcényle linéaire ou ramifié contenant de 2 à 4 atomes de carbone, n est égal à 1 ou 2, x est un entier choisi parmi 0, 1, 2, 3 ou 4, R' est choisi parmi un radical alkyle linéaire ou ramifié contenant de 1 à 4 atomes de carbone, un radical alcényle linéaire ou ramifié contenant de 2 à 4 atomes de carbone,
dans un procédé de production de gaz de synthèse enrichi en hydrogène par une réaction de déplacement du gaz à l'eau catalytique conduite sur un gaz de synthèse brut.

## Patentansprüche

**1.** Verfahren zur Herstellung von wasserstoffangereichertem Synthesegas durch eine an einem rohen Synthesegas durchgeführte katalytische Wassergas-Shift-Reaktion, umfassend die folgenden Schritte:

- Einträgen eines gasförmigen Stroms (I), der mindestens eine Verbindung der Formel (I) umfasst:

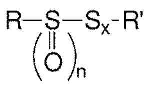

(I)

in welcher R aus einem linearen oder verzweigten Alkylrest mit 1 bis 4 Kohlenstoffatomen und einem linearen oder verzweigten Alkenylrest mit 2 bis 4 Kohlenstoffatomen ausgewählt ist, n gleich 0, 1 oder 2 ist, x für eine ganze Zahl steht, die aus 0, 1, 2, 3 oder 4 ausgewählt ist, R' aus einem linearen oder verzweigten Alkylrest mit 1 bis 4 Kohlenstoffatomen, einem linearen oder verzweigten Alkenylrest mit 2 bis 4 Kohlenstoffatomen ausgewählt ist und nur im Fall von n = x = 0 einem Wasserstoffatom ausgewählt ist,
in einen ersten Reaktor (2), der einen Katalysator $X_1$ umfasst, wobei der Katalysator $X_1$ mindestens ein Metall aus den Gruppen VIB und VII des Periodensystems umfasst,

- Sammeln eines Schwefel enthaltenden gasförmigen Stroms (3) aus dem ersten Reaktor,
- Einträgen des rohen Synthesegases (4) in einen zweiten Reaktor (6),
- Eintragen des Schwefel enthaltenden gasförmigen Stroms (3) in den zweiten Reaktor, in dem die katalytische Wassergas-Shift-Reaktion stattfindet und der einen schwefelresistenten Shift-Katalysator $X_2$ umfasst, wobei der Schwefel enthaltende gasförmige Strom (3) über den Strom (3.1) direkt und/oder nach Mischen mit dem rohen Synthesegas (4) über den Strom (3.2) in den zweiten Reaktor eingetragen wird,
- Sammeln eines Auslassstroms (7) aus dem zweiten Reaktor, wobei der Auslassstrom (7) ein wasserstoffangereichertes Synthesegas umfasst.

**2.** Verfahren nach Anspruch 1, wobei die Verbindung der Formel (I) aus Dimethyldisulfid und Dimethylsulfoxid, vorzugsweise Dimethyldisulfid, ausgewählt wird.

**3.** Verfahren nach Anspruch 1 oder 2, wobei die katalytische Wassergas-Shift-Reaktion in einem Reaktor mit einer

Einlassgastemperatur von mindestens 230 °C, vorzugsweise von 240 bis 320 °C, weiter bevorzugt von 250 bis 310 °C, durchgeführt wird.

**4.** Verfahren nach einem der Ansprüche 1 bis 3, wobei der erste Reaktor (2) bei einer Temperatur im Bereich von 100 bis 600 °C, vorzugsweise von 150 bis 400 °C, weiter bevorzugt von 200 bis 350 °C, verwendet wird.

**5.** Verfahren nach einem der Ansprüche 1 bis 4, wobei der erste Reaktor (2) bei einem Druck im Bereich von 0 bis 60 bar, vorzugsweise von 10 bis 40 bar, verwendet wird.

**6.** Verfahren nach einem der Ansprüche 1 bis 5, wobei die Verbindung der Formel (I) mit einer Durchflussrate von 1 Nl/h bis 10 $Nm^3/h$ kontinuierlich in den ersten Reaktor (2) eingeleitet wird.

**7.** Verfahren nach einem der Ansprüche 1 bis 6, wobei ein Wasserstoffstrom in den ersten Reaktor (2) eingeleitet wird, wobei der Wasserstoffstrom aus einer externen Quelle stammt oder aus dem Auslassstrom (7) des zweiten Reaktors (6) gesammelt wird.

**8.** Verfahren nach einem der Ansprüche 1 bis 7, wobei der Katalysator $X_1$ mindestens ein Metall ausgewählt aus Molybdän, Wolfram, Nickel und Cobalt umfasst, wobei der Katalysator vorzugsweise auf einem porösen Trägermaterial wie Aluminiumoxid, Siliciumdioxid oder Siliciumdioxid, Aluminiumoxid immobilisiert ist.

**9.** Verfahren nach einem der Ansprüche 1 bis 8, wobei es sich bei dem Katalysator $X_2$ um einen Katalysator auf Basis von Cobalt und Molybdän handelt.

**10.** Verfahren nach einem der Ansprüche 1 bis 9, wobei der Katalysator $X_2$ ein Alkalimetall, vorzugsweise Natrium, Kalium oder Caesium, umfasst.

**11.** Verfahren nach einem der Ansprüche 1 bis 10, wobei die katalytische Wassergas-Shift-Reaktion bei einem Druck von mindestens 10 bar, vorzugsweise in einem Bereich von 10 bis 25 bar, durchgeführt wird.

**12.** Verfahren nach einem der Ansprüche 1 bis 11, wobei das hohe Synthesegas (4) Wasser und Kohlenmonoxid in einem Molverhältnis von Wasser zu Kohlenmonoxid von mindestens 1, vorzugsweise mindestens 1,2, weiter bevorzugt 1,4, umfasst.

**13.** Verfahren nach einem der Ansprüche 1 bis 12, wobei die Verweilzeit in dem zweiten Reaktor (6) im Bereich von 20 bis 60 Sekunden liegt.

**14.** Verwendung mindestens einer Verbindung der Formel (I) :

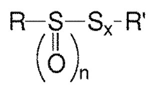

(I)

in welcher R aus einem linearen oder verzweigten Alkylrest mit 1 bis 4 Kohlenstoffatomen und einem linearen oder verzweigten Alkenylrest mit 2 bis 4 Kohlenstoffatomen ausgewählt ist, n gleich 1 oder 2 ist, x für eine ganze Zahl steht, die aus 0, 1, 2, 3 oder 4 ausgewählt ist, R' aus einem linearen oder verzweigten Alkylrest mit 1 bis 4 Kohlenstoffatomen, einem linearen oder verzweigten Alkenylrest mit 2 bis 4 Kohlenstoffatomen ausgewählt ist, bei einem Verfahren zur Herstellung von wasserstoffangereichertem Synthesegas durch eine an einem rohen Synthesegas durchgeführte katalytische Wassergas-Shift-Reaktion.

## Claims

**1.** Process for producing hydrogen-enriched synthesis gas by means of a catalytic gas-to-water displacement reaction carried out on a crude synthesis gas, comprising the following steps:

- introducing a gas stream (1) comprising at least one compound of formula (I)

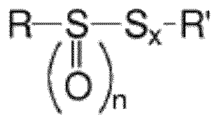

(I)

in which R is chosen from a linear or branched alkyl radical containing from 1 to 4 carbon atoms, and a linear or branched alkenyl radical containing from 2 to 4 carbon atoms, n is equal to 0, 1 or 2, x is an integer chosen from 0, 1, 2, 3 or 4, R' is chosen from a linear or branched alkyl radical containing from 1 to 4 carbon atoms, a linear or branched alkenyl radical containing from 2 to 4 carbon atoms and, only when n=x=0, a hydrogen atom,
in a first reactor (2) comprising a catalyst $X_1$, said catalyst $X_1$ comprising at least one metal chosen from groups VIB and VII of the periodic table,

- collecting a gas stream containing sulfur (3) from the first reactor,
- introducing the crude synthesis gas (4) into a second reactor (6),
- introducing the gas stream containing sulfur (3) into the second reactor where the catalytic gas-to-water displacement reaction takes place and comprising a sulfur resistant displacement catalyst $X_2$, the gas stream containing sulfur (3) being introduced into the second reactor directly by means of the stream (3.1) and/or after mixing by means of the stream (3.2) with the crude synthesis gas (4),
- collecting an output stream (7) from the second reactor, said output stream (7) comprising a hydrogen-enriched synthesis gas.

**2.** Process according to Claim 1, in which the compound of formula (I) is chosen from dimethyl disulfide and dimethyl sulfoxide, preferably dimethyl disulfide.

**3.** Process according to Claim 1 or Claim 2, in which the catalytic gas-to-water displacement reaction is carried out with an entry gas temperature of at least 230°C, preferably from 240 to 320°C, more preferentially from 250 to 310°C.

**4.** Process according to any one of Claims 1 to 3, in which the first reactor (2) is used at a temperature in the range of from 100 to 600°C, preferably from 150 to 400°C, more preferentially from 200 to 350°C.

**5.** Process according to any one of Claims 1 to 4, in which the first reactor (2) is used at a pressure in the range of from 0 to 60 bar, preferably from 10 to 40 bar.

**6.** Process according to any one of Claims 1 to 5, in which the compound of formula (I) is continuously injected into the first reactor (2) at a flow rate of from 1 Nl/h to 10 $Nm^3/h$.

**7.** Process according to any one of Claims 1 to 6, in which a hydrogen stream is introduced into the first reactor (2), said hydrogen stream originating from an exogenous source or being collected from the output stream (7) of the second reactor (6).

**8.** Process according to any one of Claims 1 to 7, in which the catalyst $X_1$ comprises at least one metal chosen among molybdenum, tungsten, nickel and cobalt, said catalyst preferably being immobilized on a support made of porous material such as alumina, silica or silica-alumina.

**9.** Process according to any one of Claims 1 to 8, in which the catalyst $X_2$ is a catalyst based on cobalt and molybdenum.

**10.** Process according to any one of Claims 1 to 9, in which the catalyst $X_2$ comprises an alkali metal, preferably sodium, potassium or caesium.

**11.** Process according to any one of Claims 1 to 10, in which the catalytic gas-to-water displacement reaction is carried out at a pressure of at least 10 bar, preferably in the range of from 10 to 25 bar.

**12.** Process according to any one of Claims 1 to 11, in which the crude synthesis gas (4) comprises water and carbon monoxide in a molar ratio of water to carbon monoxide of at least 1, preferably at least 1.2, more preferentially at least 1.4.

**13.** Process according to any one of Claims 1 to 12, in which the residence time in the second reactor (6) is in the range of from 20 to 60 seconds.

**14.** Use of at least one compound of formula (I):

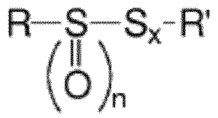

(I)

in which R is chosen from a linear or branched alkyl radical containing from 1 to 4 carbon atoms, and a linear or branched alkenyl radical containing from 2 to 4 carbon atoms, n is equal to 1 or 2, x is an integer chosen from 0, 1, 2, 3 or 4, R' is chosen from a linear or branched alkyl radical containing from 1 to 4 carbon atoms, and a linear or branched alkenyl radical containing from 2 to 4 carbon atoms, in a process for producing hydrogen-enriched synthesis gas by means of a catalytic gas-to-water-displacement reaction carried out on a crude synthesis gas.

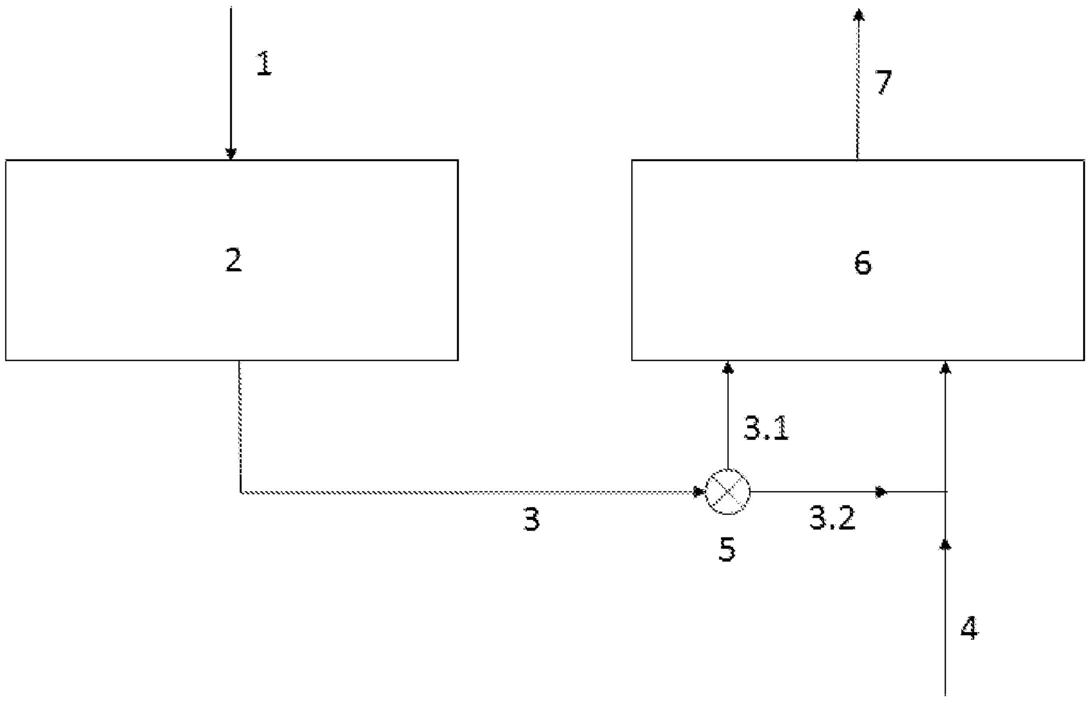


Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011012815 A1


### Littérature non-brevet citée dans la description


- **DAVID S. NEWSOME.** *Catal. Rev.-Sci. Eng.,* 1980, vol. 21 (2), 275-318
- **STENBERG et al.** *Angew. Chem. Int. Ed. Engl.,* 1982, vol. 21 (8), 619-620
- **PARK et al.** A Study on the Sulfur-Resistant Catalysts for Water Gas Shift Reaction - IV. Modification of CoMo/γ-Al2O3 Catalyst with Iron Group Metals. *Bull. Korean Chem. Soc.,* 2000, vol. 21 (12), 1239-1244